# EUROPÄISCHE PATENTANMELDUNG

(11) **EP 4 640 611 A1**
(43) Veröffentlichungstag der Anmeldung: **29.10.2025**
(21) Anmeldenummer: 25172509.9
(22) Anmeldetag: 25.04.2025
(51) Int. Cl.: B66C 7/08, E01B 9/02, E01B 9/66, B23Q 1/00

(54) **LAGERVORRICHTUNG, INSBESONDERE SCHIENENLAGER FÜR EINE KRANBAHN**

(30) Priorität: 26.04.2024 DE 102024111852
(71) Anmelder: RSE + Beteiligungen GmbH, 34123 Kassel (DE)
(72) Erfinder: Bleichert, Oliver, 34125 Kassel (DE); Wagner, Gerd Christian, 34466 Wolfhagen (DE)
(74) Vertreter: REHBERG HÜPPE + PARTNER

(57) **Zusammenfassung**

Eine Lagervorrichtung weist ein Lagerelement (4) zur Lagerung eines Konstruktionselements einer Stahlkonstruktion, ein Sockelelement (5) zur Befestigung an einer Tragstruktur (3) und eine das Lagerelement (4) gegenüber dem Sockelelement (5) ausrichtende und an dem Sockelelement (5) in Richtung einer vertikal auszurichtenden virtuellen Hauptachse (36) der Lagervorrichtung abstützende verstellbare Ausgleichseinrichtung (25) auf. Mit Hilfe der Ausgleichseinrichtung (25) sind eine Höhenlage und eine Winkellage des Lagerelements (4) gegenüber dem Sockelelement (5) einstellbar. Die Ausgleichseinrichtung (25) weist eine längs der Hauptachse (36) ausgerichtete mechanische Reihenschaltung einer durch gegeneinander Verspannen ihrer Bestandeile blockierbaren Gelenkanordnung (26) und einer durch Einschrauben längs der Hauptachse (36) längenveränderlichen Tragsäule (27) auf. Die nicht blockierte Gelenkanordnung (26) ermöglicht ein Verschwenken des Lagerelements (4) gegenüber dem Sockelelement (5) um jede Schwenkachse (44) ermöglicht, die die Hauptachse in einem Schwenkpunkt (35) rechtwinklig schneidet, und eine Einschraubstellung der Tragsäule (27) ist durch das an dem Lagerelement (4) gelagerte Konstruktionselement fixierbar.

## Beschreibung

### TECHNISCHES GEBIET DER ERFINDUNG

Die Erfindung bezieht sich auf eine Lagervorrichtung mit einem Lagerelement zur Lagerung eines Konstruktionselements einer Stahlkonstruktion, mit einem Sockelelement zur Befestigung an einer Tragstruktur und mit einer das Lagerelement gegenüber dem Sockelelement ausrichtenden und an dem Sockelelement in einer vertikal auszurichtenden virtuellen Hauptachse der Lagervorrichtung abstützenden verstellbaren Ausgleichseinrichtung. Mit Hilfe der Ausgleichseinrichtung sind eine Höhenlage und eine Winkellage des Lagerelements gegenüber dem Sockelelement einstellbar.

Die Einstellbarkeit der Ausgleichseinrichtung der Lagervorrichtung dient beispielsweise dazu, Abweichungen der Tragstruktur von einem gewünschten Verlauf einer zu lagernden Schiene auszugleichen, so dass die Schiene beispielsweise exakt waagerecht, geradlinig und parallel zu einer zweiten Schiene verläuft.

Die Lagervorrichtung kann zu einer stehenden Montage vorgesehen sein, bei der das Konstruktionselement der Stahlkonstruktion oberhalb der Tragstruktur verläuft und über die Lagervorrichtung auf der Tragstruktur aufsteht. Ebenso ist eine hängende Montage der Lagervorrichtung möglich, bei der das Konstruktionselement der Stahlkonstruktion unterhalb der Tragstruktur verläuft und über die Lagervorrichtung an der Tragstruktur hängt.

Bei einer mit der Lagervorrichtung zu lagernden Schiene kann es sich direkt um eine Fahrschiene beliebigen Profils zur Führung von Rollen oder Rädern irgendeines Wagens handeln. Alternativ kann zwischen einer solchen Fahrschiene und dem Lagerelement eine zusätzliche Zwischenschiene angeordnet werden, um Durchbiegungen der Fahrschiene unter größeren Lasten zu verhindern.

Eine Mehrzahl der Lagervorrichtungen kann verwendet werden, um eine Kranbahn mit zwei Schienen auszubilden, wobei die Lagervorrichtungen längs der beiden Schienen verteilt angeordnet sind und die beiden Schienen gegenüber der Tragstruktur definiert ausrichten.

In anderen Ausführungsformen ist das mit der Lagervorrichtung zu lagernde Konstruktionselement ein schienenförmiger Horizontalträger oder irgendein anderes Konstruktionselement einer Stahlkonstruktion, die insbesondere die Stahlkonstruktion eines Stahlbaus sein kann, der über eine Mehrzahl der Lagervorrichtungen an einer Tragstruktur z. B. aus Beton, wie einem Betonfundament, abgestützt und dieser gegenüber ausgerichtet ist.

### STAND DER TECHNIK

Die DD 233 605 A1 beschreibt ein Kranbahnauflager an Stahlbetonstützen mit Konsolenausbildung. Das Kranbahnauflager besteht aus zwei Fachwerkscheiben, die über Träger und Futterbleche mittels Verbindungselementen um die Stahlbetonstütze verschnallt werden. Die Fachwerkscheiben setzen sich jeweils aus Kragarm, Vertikalstrebe, Manschette, Füllstab und Diagonalstrebe zwischen Kragarm und Manschette zusammen. Die Vertikalstrebe ist für schwere Kräne nach unten hin verlängert. Der Fußpunkt der verlängerten Vertikalstrebe ist durch eine Manschette an der jeweiligen Stahlbetonstütze fixiert. Gleichzeitig ist dieser Fußpunkt gelenkig mit dem Kragarm unterhalb der Kranbahn durch Diagonalen verbunden. Durch größer gehaltene Bohrungen in einem oberen Auflagerblech können vorhandene Bautoleranzen der jeweiligen Stahlbetonstütze ausgeglichen werden. Nach dem Ausrichten der Kranbahn soll das obere Auflagerblech mit einem unteren Auflagerblech durch eine Kehlnaht verbunden werden. Weiterhin ist durch Futterbleche und Langlöcher eine Höhen- und Seitenverstellbarkeit realisiert.

Aus der SU 750001 A1 ist ein Kranbahnlager bekannt, bei dem auf einer unteren Konsole einer Tragstruktur eine Kranbahn abgesetzt ist und bei dem durch eine obere Konsole der Tragstruktur, die sich etwa auf Höhe einer Fahrschiene der Kranbahn befindet, seitliche Kräfte aufgenommen werden. Dazu sind längeneinstellbare Distanzelemente vorhanden, die miteinander verschraubte Bestandteile aufweisen.

Aus der CH 446 652 A ist eine Kranbahn bekannt, die mehrere gleichartige Gleisstücke aus durch Distanzstücke im Abstand voneinander gehaltenen Schienenelementen umfasst. An einem Ende der Gleisstücke ist für jedes Schienenelement mindestens eine höhenverstellbare Stütze vorgesehen, die das Gleisstück an einer Grundplatte abstützt. Die höhenverstellbare Stütze ist mit Gewindespindeln ausgebildet. An jedem Ende jedes Schienenelements sind zwei symmetrisch zur senkrechten Längsmittelebene desselben angeordnete Gewindemuttern fest angebracht. In den Gewindemuttern sind die sich an der Grundplatte abstützenden Gewindespindeln drehbar. Quer zu einer Gleislängsrichtung sind die höhenverstellbaren Stützen schwenkbar an der Grundplatte abgestützt.

### AUFGABE DER ERFINDUNG

Der Erfindung liegt die Aufgabe zugrunde, eine als Kranbahnauflager geeignete Lagervorrichtung aufzuzeigen, bei der eine Höhenlage und eine Winkellage eines Lagerelements zur Lagerung eines Konstruktionselements einer Stahlkonstruktion gegenüber einem Sockelelement zur Befestigung an einer Tragstruktur zumindest weitgehend unabhängig voneinander einstellbar sind.

### LÖSUNG

Die Aufgabe der Erfindung wird durch eine Lagervorrichtung mit den Merkmalen des unabhängigen Patentanspruchs 1 gelöst. Die abhängigen Patentansprüche 2 bis 14 sind auf bevorzugte Ausführungsformen der erfindungsgemäßen Lagervorrichtung gerichtet. Der abhängige Patentanspruch 14 betrifft eine Kranbahn mit zwei Schienen und einer Mehrzahl von erfindungsgemäßen Lagervorrichtungen; und der abhängige Patentanspruch 15 betrifft einen Stahlbau mit einer Stahlkonstruktion und mit einer Mehrzahl von erfindungsgemäßen Lagervorrichtungen.

### BESCHREIBUNG DER ERFINDUNG

Eine erfindungsgemäße Lagervorrichtung weist ein Lagerelement zur Lagerung eines Konstruktionselements einer Stahlkonstruktion, ein Sockelelement zur Befestigung an einer Tragstruktur und ein das Lagerelement gegenüber dem Sockelelement ausrichtendes und an dem Sockelelement in Richtung einer vertikal auszurichtenden virtuellen Hauptachse der Lagervorrichtung abstützende verstellbare Ausgleichseinrichtung auf. Mit Hilfe der Ausgleichseinrichtung sind eine Höhenlage und eine Winkellage des Lagerelements gegenüber dem Sockelelement einstellbar. Dazu weist die Ausgleichseinrichtung eine längs der Hauptachse ausgerichtete mechanische Reihenschaltung einer Gelenkanordnung und einer Tragsäule auf. Die Gelenkanordnung ist durch gegeneinander Verspannen ihrer Bestandteile blockierbar; und die nicht blockierte Gelenkanordnung ermöglicht ein Verschwenken des Lagerelements gegenüber dem Sockelelement um jede Schwenkachse, die die Hauptachse in einem vorgegebenen Schwenkpunkt rechtwinklig schneidet. Die Tragsäule ist durch Einschrauben längs der Hauptachse längenveränderlich; und eine Einschraubstellung der Tragsäule ist durch das an dem Lagerelement gelagerte Konstruktionselement der Stahlkonstruktion fixierbar, d. h. sie wird durch das an dem Lagerelement gelagerte Konstruktionselement fixiert.

Wie eingangs ausgeführt wurde, kann die Lagervorrichtung entweder zur stehenden oder zur hängenden Montage vorgesehen sein, so dass sich das Sockelelement in Richtung der vertikal auszurichtenden virtuellen Hauptachse der Lagervorrichtung entweder unter oder über dem Lagerelement und dem daran gelagerten Konstruktionselement befindet.

Um die Höhenlage und die Winkellage des Lagerelements gegenüber dem Sockelelement einzustellen, ist die Reihenschaltung der Gelenkanordnung und der Tragsäule vorgesehen. Indem die nicht blockierte Gelenkanordnung ein Verschwenken des Lagerelements gegenüber dem Sockelelement um jede beliebige Schwenkachse ermöglicht, die die vertikal auszurichtende Hauptachse in dem vorgegebenen Schwenkpunkt rechtwinklig schneidet, kann die Winkellage des Lagerelements gegenüber dem Sockelelement eingestellt werden, was seine Neigung gegenüber der Horizontalen anbelangt. Insbesondere kann so ein an dem Lagerelement gelagertes Konstruktionselement in Form einer Schiene exakt waagerecht oder mit vorgegebener Steigung und exakt senkrecht oder mit vorgegebener seitlicher Neigung ausgerichtet werden.

Der verbleibende dritte Drehfreiheitsgrad, der in diesem Beispiel die Richtung der an dem Lagerelement gelagerten Schiene betrifft, ist weniger kritisch. Um eine Anpassbarkeit der Lagervorrichtung in dieser Drehrichtung um die Hauptachse zu erreichen, kann die nicht blockierte Gelenkanordnung zusätzlich ein Verdrehen des Lagerelements gegenüber dem Sockelelement um die Hauptachse ermöglichen. In der Regel ist es jedoch ausreichend, wenn das Konstruktionselement in einer diskreten Anzahl von Drehstellungen um die Hauptachse an dem Lagerelement befestigt werden kann, was noch näher erläutert werden wird.

In jedem Fall wird die Einschraubstellung der Tragsäule bei der erfindungsgemäßen Lagervorrichtung zumindest auch durch das an dem Lagerelement gelagerte Konstruktionselement fixiert, wobei davon auszugehen ist, dass das oder ein mit ihm starr verbundenes weiteres Konstruktionselement auch noch in weiteren Lagervorrichtungen gelagert ist. Diese weiteren Lagervorrichtungen können ebenfalls erfindungsgemäß ausgebildet sein oder nicht. Grundsätzlich kann die Einschraubstellung der Tragsäule zusätzlich durch ein Konter- oder Sicherungselement fixiert werden. Ebenso ist eine Sicherung mit einem Schraubensicherungslack oder dergleichen möglich. Damit die Einschraubstellung der Tragsäule durch das an dem Lagerelement gelagerte Konstruktionselement fixierbar ist, weist die Tragsäule nur zwei miteinander verschraubte Bestandteile auf, d. h. einen lagerelementseitigen Bestandteil und einen sockelelementseitigen Bestandteil, deren relative Drehstellung um die Hauptachse durch das Festlegen des Sockelelements an einer Tragstruktur und das Befestigen des Konstruktionselements der Stahlkonstruktion an dem Lagerelement fixiert wird.

Bei der Montage der erfindungsgemäßen Lagervorrichtung werden in beliebiger Reihenfolge, aber getrennt voneinander die Höhenlage des Lagerelements gegenüber dem Sockelelement und die Neigung des Lagerelements gegenüber dem Sockelelement nach Bedarf eingestellt. Dann wird die Neigung des Lagerelements gegenüber dem Sockelelement durch Blockieren der Gelenkanordnung fixiert, und durch Befestigen des Konstruktionselements in der resultierenden Drehstellung des Lagerelements um die Hauptachse wird die Höhenlage des Lagerelements gegenüber dem Sockelelement fixiert.

Der vorgegebene Schwenkpunkt, in dem die durch die Gelenkanordnung ermöglichten Schwenkachsen die Hauptachse rechtwinklig schneiden, liegt vorzugsweise nahe einer Konstruktionsanschlussfläche des Lagerelements, d. h. am Fuß des darauf gelagerten Konstruktionselements. Besonders bevorzugt ist es, wenn der vorgegebene Schwenkpunkt in Richtung längs der Hauptachse einen Abstand zu der Konstruktionsanschlussfläche des Lagerelements aufweist, der nicht mehr als 20 % einer Gesamthöhe der Lagervorrichtung längs der Hauptachse zwischen einer Strukturanschlussfläche des Sockelelements und der Konstruktionsanschlussfläche des Lagerelements beträgt. Noch mehr bevorzugt beträgt der Abstand nicht mehr als 10 % der Gesamthöhe. Wenn der vorgegebene Schwenkpunkt genau in der Konstruktionsanschlussfläche des Lagerelements liegt, kann mit der Gelenkanordnung die Neigung der Konstruktionsanschlussfläche eingestellt werden, ohne dass sich die Konstruktionsanschlussfläche in Richtung radial zu der Hauptachse verlagert, d. h. ohne die Notwendigkeit, derartige Verlagerungen anschließend zu kompensieren.

Konkret kann die Gelenkanordnung ein Kugelgelenk mit einer kugelschalenausschnittförmigen Gelenkschale und einem darin anliegenden Gelenkkopf aufweisen. Durch die Beweglichkeit des Gelenkkopfes in der Gelenkschale des Kugelgelenks sind unmittelbar Schwenkbewegungen um alle rechtwinklig in dem Schwenkpunkt durch die Hauptachse verlaufenden Schwenkachsen möglich. Zudem ist durch eine Verdrehbarkeit des Gelenkkopfs in der Gelenkschale um die Hauptachse auch der dritte Drehfreiheitsgrad um die Hauptachse realisiert.

Wenn dann der Kugelradius der Gelenkschale relativ groß ist, kann der Schwenkpunkt besonders einfach nahe der Konstruktionsanschlussfläche vorgegeben werden, auch wenn sich bei der mechanischen Reihenschaltung die Tragsäule zwischen der Gelenkanordnung und dem Lagerelement befindet.

Jedoch versteht es sich, dass dann, wenn die längenveränderliche Tragsäule in der mechanischen Reihenschaltung zwischen der Gelenkanordnung und dem Lagerelement angeordnet ist, mit jeder Längenänderung der Tragsäule der mit der Gelenkanordnung vorgegebene Schwenkpunkt längs der Hauptachse gegenüber dem Lagerelement und der an diesem vorgesehenen Konstruktionsanschlussfläche verlagert wird.

Um eine möglichst große Anlagefläche des Gelenkkopfs in der Gelenkschale zu realisieren, ist ein quer zu der Hauptachse verlaufender Kopfdurchmesser des Gelenkkopfs vorzugsweise nicht kleiner als ein kleinster Säulendurchmesser der Tragsäule. Über diese große Anlagefläche verteilen sich die in Richtung der Hauptachse auf die Lagervorrichtung wirkenden Kräfte. Die Gelenkschale ist quer zu der Hauptachse vorzugsweise so groß, dass sich der Gelenkkopf in allen Relativlagen, die beim Einstellen der Winkellage des Lagerelements gegenüber dem Sockelelement erreicht werden, vollflächig an der Gelenkschale anliegt.

Wenn die Gelenkschale und/oder der Gelenkkopf eine Ausnehmung zum Durchtritt eines längs der Hauptachse verlaufenden Spannbolzens aufweist, wobei der Spannbolzen radiales Spiel in mindestens einer der Ausnehmungen aufweist, kann der Gelenkkopf in der Gelenkschale über dieses Spiel hinweg verschwenkt werden, und die erreichte Schwenkstellung kann durch Anziehen des Spannbolzens fixiert werden. Vorzugsweise weist nur die Gelenkschale oder der Gelenkkopf eine solche Ausnehmung auf, während in dem anderen Teil der Gelenkanordnung ein Innengewinde vorgesehen ist, in das der Spannbolzen zum Verspannen der beiden Bestandteile des Kugelgelenks einschraubbar ist. Dabei kann in üblicher Weise zwischen einem Kopf des Spannbolzens und dem Bestandteil des Kugelgelenks mit der Ausnehmung eine Spannplatte mit einer kugelschalenausschnittförmigen Unterseite angeordnet werden.

Als Alternative zu der Gelenkanordnung mit dem Kugelgelenk kann die Gelenkanordnung ein einachsiges Schwenkgelenk mit einer einzigen die Hauptachse in dem Schwenkpunkt rechtwinklig schneidenden Schwenkachse und ein mit dem Schwenkgelenk längs der Hauptachse mechanisch in Reihe geschaltetes Drehgelenk mit einer längs der Hauptachse verlaufenden Drehachse aufweisen, wobei das Schwenkgelenk mechanisch zwischen das Drehgelenk und das Lagerelement geschaltet ist. Das Drehgelenk erlaubt es damit, die einzige Schwenkachse des einachsigen Schwenkgelenks in die für die Einstellung der gewünschten Neigung des Lagerelements gegenüber dem Sockelelement benötigte Richtung um die Hauptachse zu drehen. Da dabei eine Einstellung in eine beliebige Richtung möglich ist, ermöglicht die Gelenkanordnung als Ganzes auch bei dieser Ausführungsform des Lagervorrichtung ein Verschwenken des Lagerelements um jede beliebige die Hauptachse in dem Schwenkpunkt rechtwinklig schneidende Schwenkachse. Es versteht sich, dass ein Verdrehen der einzigen Schwenkachse des Schwenkgelenks mit Hilfe des Drehgelenks auch ein Verdrehen des Lagerelements gegenüber dem Sockelelement um die Hauptachse zur Folge hat. Gegebenenfalls muss dann das Konstruktionselement in einer anderen Drehstellung um die Hauptachse an dem Lagerelement befestigt werden.

Die Tragsäule der erfindungsgemäßen Lagervorrichtung weist vorzugsweise eine geringe Streckung in Richtung der Hauptachse auf. So ist es bevorzugt, wenn der kleinste Säulendurchmesser der Tragsäule quer zu der Hauptachse mindestens 50 % einer Säulenhöhe der Tragsäule längs der Hauptachse beträgt. Noch mehr bevorzugt beträgt der Säulendurchmesser mindestens 75 % und am meisten bevorzugt mindestens 100 % der Säulenhöhe. Durch die gedrungene Form der Tragsäule ist die Tragsäule von Ihrer Form her knickstabil. Zudem sind die sich in Richtung der Hauptachse aneinander abstützenden Bereiche der ineinander eingeschraubten Bestandteile der Tragsäule vergleichsweise groß, da sie sich über einen großen Umfang um die Hauptachse erstrecken. Die in Richtung der Hauptachse wirkenden Kräfte werden also auch im Bereich der Tragsäule über große Flächen abgestützt. Dabei versteht sich, dass die Größe dieser Flächen auch von der Form der beim Einschrauben ineinandergreifenden Gewinde der Bestandteile der Tragsäule abhängen. Entsprechend versteht es sich, dass vorzugsweise solche Gewindeformen gewählt werden, die besonders große Abstützflächen bereitstellen, wie beispielsweise Flachgewinde.

Konkret kann die Tragsäule eine topfförmige Außensäule mit einem Innengewinde und eine Innensäule mit einem in das Innengewinde einschraubbaren Außengewinde aufweisen, wobei die Innensäule umgekehrt topfförmig sein kann. Um eine immer möglichst große wechselseitige Abstützfläche der Gewinde sicherzustellen, kann das Außengewinde in jeder Funktionsstellung der Tragsäule über mindestens drei, vorzugsweise mindestens fünf und am meisten bevorzugt mindestens zehn Gewindegänge in das Innengewinde eingreifen. Durch die Gestaltung der Außensäule und der Innensäule kann dafür Sorge getragen werden, dass das Außengewinde in jeder Funktionsstellung der Tragsäule über eine immer gleiche Anzahl von Gewindegängen in das Innengewinde eingreift. Es reicht aber aus, wenn der Eingriff über die Mindestanzahl der Gewindegänge auch noch dann gegeben ist, wenn die Tragsäule ihre maximale Länge aufweist, bei der die Innensäule also nur noch minimal in die Außensäule eingeschraubt ist.

Die Außensäule oder die Innensäule kann einstückig mit einem Bestandteil der Gelenkanordnung ausgebildet sein. Insbesondere gilt dies für die Innensäule. Vorzugsweise geht ein Bodenbereich der ebenfalls topfförmig ausgebildeten Innensäule in diesen Bestandteil der Gelenkanordnung über oder bildet diesen unmittelbar aus. So kann dieser Boden beispielsweise den Gelenkkopf des Kugelgelenks ausbilden.

Umgekehrt kann ein quer zu der Hauptachse verlaufender Bodenbereich der Innensäule oder der Außensäule das Lagerelement ausbilden und dabei mit mindestens acht ringförmig um die Hauptachse herum verteilt angeordneten Befestigungslöcher versehen sein. Die Befestigungslöcher sind vorzugsweise achsensymmetrisch zu der Hauptachse angeordnet und können so jeweils paarweise zur Befestigung des Konstruktionselements an dem Lagerelement in einer bestimmten Drehstellung um die Hauptachse verwendet werden. Dazu können die Befestigungslöcher mit Innengewinden für den Eingriff von Befestigungsschrauben versehen sein. Eine solche Mehrzahl von ringförmig und vorzugsweise achsensymmetrisch zu der Hauptachse angeordneten Befestigungslöchern mit Innengewinden ist auch bei anderen Ausbildungen des Lagerelements vorteilhaft. Je nach Durchmesser des Lagerelements ist eine größere Anzahl als acht Befestigungslöcher vorteilhaft, um die Schiene in feiner abgestuften Drehstellungen um die Hauptachse an dem Lagerelement befestigen zu können und um so auch feiner abgestufte Längen der Tragsäule und entsprechende Höhenlagen des Lagerelements gegenüber dem Sockelelement einstellen zu können. So ist es mehr bevorzugt, wenn mindestens 12 und noch mehr bevorzugt, wenn mindestens 16 ringförmig um die Hauptachse herum verteilt angeordnete Befestigungslöcher in dem Lagerelement vorhanden sind.

Um eine Verstellbarkeit der Lagervorrichtung in horizontaler Richtung quer zu einem schienenförmigen Konstruktionselement zu realisieren, können in dem Sockelelement quer zu dem schienenförmigen Konstruktionselement ausgerichtete Langlöcher für den Durchtritt von an der Tragstruktur abgestützten Befestigungsbolzen vorgesehen sein. Damit kann die Lagervorrichtung in der Querrichtung gegenüber der Tragstruktur ausgerichtet und danach an der Tragstruktur befestigt werden. Eine spezielle Einstellbarkeit der Lagervorrichtung in Richtung eines schienenförmigen Konstruktionselements ist hingegen vielfach nicht erforderlich. Vielmehr kann ein schienenförmiges Konstruktionselement oftmals ohne weiteres in der passenden Relativposition in seiner Längsrichtung an dem Lagerelement befestigt werden. Wenn jedoch das Konstruktionselement über Befestigungslöcher in dem Konstruktionselement an dem Lagerelement befestigt wird, können diese Befestigungslöcher als in der Längsrichtung gestreckte Langlöcher ausgebildet sein.

Wenn bei der Lagervorrichtung mindestens eine Höhenausgleichsplatte zur Anordnung zwischen dem Sockelelement und der Tragstruktur vorhanden ist, wobei die Höhenausgleichsplatte Löcher für den Durchtritt der an der Tragstruktur abgestützten Befestigungsbolzen aufweist, kann mit Hilfe der Höhenausgleichsplatten eine Grobeinstellung der Höhenlage des Lagerelements gegenüber der Tragstruktur vorgenommen werden, so dass mit Hilfe der einschraubbaren Tragsäule nur noch eine kleinere Höhendifferenz zwischen dem Lagerelement und dem Sockelelement auszugleichen ist. So können die Bestandteile der Tragsäule über einen großen Anteil ihrer Längen längs der Hauptachse in wechselseitigem Eingriff gehalten werden.

Bei der erfindungsgemäßen Lagervorrichtung ist das Lagerelement vorzugsweise ausschließlich über die mechanische Reihenschaltung der Gelenkanordnung und der Tragsäule an dem Sockelelement abgestützt. Dies ist so zu verstehen, dass es vorzugsweise genau eine mechanische Reihenschaltung aus genau einer Gelenkanordnung und genau einer Tragsäule zwischen dem Sockelelement und dem Lagerelement gibt, der in dem Bereich der jeweiligen Lagervorrichtung weder eine weitere solche Reihenschaltung noch irgendein anderes abstützendes Element parallel geschaltet ist.

Wie schon angedeutet wurde, kann das Lagerelement der Lagervorrichtung zur unmittelbaren Lagerung einer Fahrschiene ausgebildet sein. Ebenso kann das Lagerelement zur Lagerung einer Zwischenschiene ausgebildet sein, die ihrerseits zur Lagerung einer Fahrschiene ausgebildet ist. Die zusätzliche Zwischenschiene kann insbesondere bei hohen vertikalen Lasten sinnvoll sein, um ein Durchbiegen der Fahrschiene unter diesen hohen Lasten zu verhindern.

Eine erfindungsgemäße Kranbahn weist zwei Schienen und eine Mehrzahl von erfindungsgemäßen, als Schienenlager dienenden Lagervorrichtungen auf. Die Lagervorrichtungen sind längs der beiden Schienen verteilt angeordnet und richten die beiden Schienen definiert gegenüber einer Tragstruktur aus. Die Tragstruktur kann irgendeine ausreichend belastbare Struktur aus beispielsweise Beton- oder Stahlträgern sein, aber auch eine Anzahl von auf irgendeinem ausreichend belastbaren Untergrund ausgebildeten Abstützpunkten.

Ein erfindungsgemäßer Stahlbau weist eine Stahlkonstruktion und eine Mehrzahl von erfindungsgemäßen, als Gebäudelager dienende Lagervorrichtungen auf. Die Lagervorrichtungen sind über eine Strukturschnittstelle der Stahlkonstruktion verteilt angeordnet und richten die Stahlkonstruktion gegenüber einer Tragstruktur definiert aus. Die Strukturschnittstellle kann eine Unterseite der gesamten Stahlkonstruktion oder. wie bespielsweise bei einer hängenden Bühne, eine Unterseite eines Tragrahmens der Stahlkonstruktion sein. Die Tragstruktur kann aus Beton ausgebildet sein, z. B. als Betonfundament, aber auch aus anderen Materialien, wie beispielsweise aus Holz oder ebenfalls aus Stahl.

Bereits bei einem Außendurchmesser der Tragsäule von weniger als 30 cm, Wandstärken der Außensäule und der Innensäule von jeweils 10 mm sowie ineinander eingreifenden Gewinden der Außensäule und der Innensäule mit einer axialen Steigung von 2 mm und einer radialen Tiefe von 1 mm ist bei Verwendung eines handelsüblichen Baustahls S235 eine Tragfestigkeit der erfindungsgemäßen Lagervorrichtung von über 150.000 kg realisierbar.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Spannbolzen die Rede ist, ist dies so zu verstehen, dass genau ein Spannbolzen, zwei Spannbolzen oder mehr Spannbolzen vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine an einer Tragstruktur montierte und eine Schiene lagernde erste Ausführungsform der erfindungsgemäßen Lagervorrichtung als Schienenlager in einem Schnitt längs seiner vertikal ausgerichteten Hauptachse.
- **Fig. 2**: ist eine Ansicht der Ausführungsform der Lagervorrichtung gemäß Fig. 1 von oben.
- **Fig. 3**: ist eine perspektivische isometrische Ansicht der Ausführungsform der Lagervorrichtung gemäß Fig. 1 und 2 ohne die Tragstruktur.
- **Fig. 4**: ist ein Fig. 1 entsprechender Schnitt durch eine andere Ausführungsform der erfindungsgemäßen Lagervorrichtung als Schienenlager.
- **Fig. 5**: ist eine Fig. 2 entsprechende Ansicht der Ausführungsform der Lagervorrichtung gemäß Fig. 4.
- **Fig. 6**: ist eine Fig. 3 entsprechende perspektivische isometrische Ansicht der Ausführungsform der Lagervorrichtung gemäß Fig. 4 und 5.
- **Fig. 7**: ist eine Seitenansicht eines Details einer Gelenkanordnung der Ausführungsform der Lagervorrichtung gemäß Fig. 4 bis 6; und
- **Fig. 8**: ist eine perspektivische isometrische Ansicht eines Teils des Details gemäß Fig. 7.

### FIGURENBESCHREIBUNG

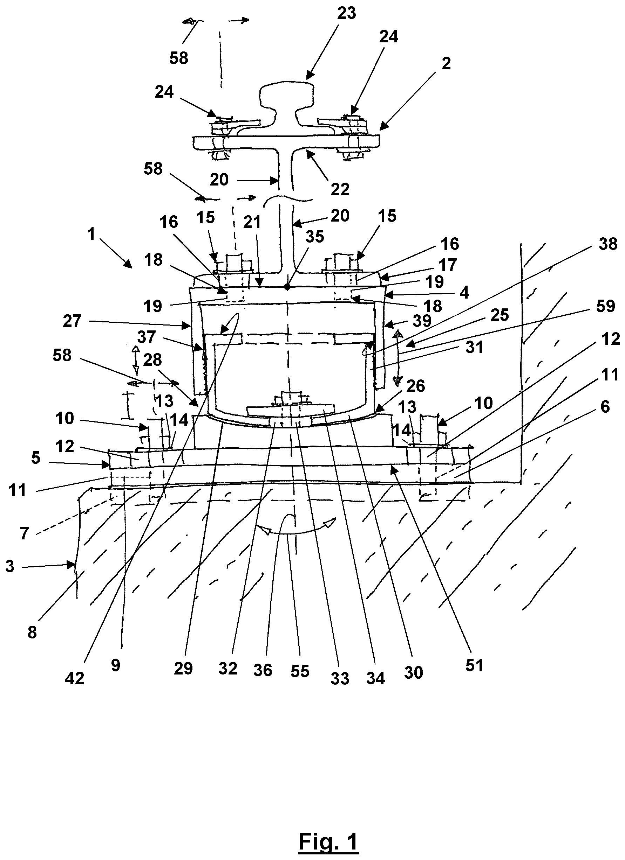

Das in dem Schnitt gemäß Fig. 1 als Beispiel für eine erfindungsgemäße Lagervorrichtung dargestellte Schienenlager 1 dient zur Lagerung und Ausrichtung einer Schiene 2 an und gegenüber einer Tragstruktur 3. Die Schiene 2 ist ein Beispiel für ein mit der Lagervorrichtung an der Tragstruktur lagerbares Konstruktionselement einer Stahlkonstruktion. Das Schienenlager 1 weist ein Lagerelement 4 zur Lagerung der Schiene 2 und ein Sockelelement 5 zur Befestigung an der Tragstruktur 3 auf. Das Sockelelement 5 liegt hier auf einer Konsole 6 der Tragstruktur 3 auf, konkret auf einer Befestigungsplatte 7, die in einen Betonkörper 8 der Tragstruktur 3 eingelassen und mit diesem verklebt ist. Auf der Befestigungsplatte 7 liegt eine Höhenausgleichsplatte 9 auf, auf der wiederum das Sockelelement 5 aufliegt. Von der Befestigungsplatte 7 abstehende Befestigungsbolzen 10 erstrecken sich durch Löcher 11 in der Höhenausgleichsplatte 9 und durch in Querrichtung zu der Schiene 2 gestreckt ausgebildete Langlöcher 12 in dem Sockelelement 5. Auf die Befestigungsbolzen 10 aufgeschraubte Muttern 13 liegen über Unterlegscheiben 14 von oben an dem Sockelelement an und spannen dieses gegen die Befestigungsplatte 7. Damit liegt das Sockelelement 5 in einer Position, die über die Quererstreckung der Langlöcher 12 hinweg variabel ist und durch die Dicke der Höhenausgleichsplatte 9 vorgegeben ist, gegenüber der Befestigungsplatte 7 fest.

An das Lagerelement 4 ist die Schiene 2 mit Hilfe von Befestigungsschrauben 15 angeschraubt. Die Befestigungsschrauben 15 greifen durch in Längsrichtung der Schiene 2 gestreckt ausgebildete Langlöcher 16 in einem Fuß 17 einer Zwischenschiene 20 der Schiene 2 hindurch in Befestigungslöcher 18 in dem Lagerelement 4 ein. Die Befestigungslöcher 18 sind mit Innengewinden 19 versehen. Der Fuß 17 der Zwischenschiene 20 liegt direkt oder unter Zwischenordnung einer hier nicht dargestellten Zwischenlage auf einer Konstruktionsanschlussfläche 21 des Lagerelements 4 auf. Auf einem Kopf 22 der Zwischenschiene 20, die als Doppel-T-Träger ausgebildet ist, ist eine Fahrschiene 23 mit Schraubklemmen 24 befestigt.

Zwischen dem Lagerelement 4 und dem Sockelelement 5 weist das Schienenlager 1 eine Ausgleichseinrichtung 25 auf. Die Ausgleichseinrichtung 25 umfasst eine mechanische Reihenschaltung einer Gelenkanordnung 26 und einer Tragsäule 27. Die Gelenkanordnung 26 weist hier ein Kugelgelenk 28 mit einer kugelschalenausschnittförmigen Gelenkschale 29 und mit einem ebenfalls kugelschalenausschnittförmigen Gelenkkopf 30 auf. Der Gelenkkopf 30 liegt vollflächig an der Gelenkschale 29 an. Der Gelenkkopf 30 ist ein Bodenbereich einer Innensäule 31 der Tragsäule 27. Der Gelenkkopf 30 weist eine Ausnehmung 32 auf, durch die hindurch ein Spannbolzen 33 in ein nicht dargestelltes Innengewinde in der Gelenkschale 29 eingreift. Der Spannbolzen 33 weist radiales Spiel in der Ausnehmung 32 auf. Wenn der Spannbolzen 33 angezogen wird, drückt er eine Spannplatte 34 mit einer kugelschalenausschnittförmigen Unterseite, die am Rand der Ausnehmung 32 aufliegt, an die Rückseite des Gelenkkopfs 30 an. So werden der Gelenkkopf 30 und die Gelenkschale 29 des Kugelgelenks 28 gegeneinander verspannt, und auf diese Weise wird das Kugelgelenk 26 blockiert.

Bei nicht blockierter Gelenkanordnung 26 erlaubt das Kugelgelenk 28 ein Verschwenken der Tragsäule 27 gegenüber dem Sockelelement 5 um beliebige Schwenkachsen, die durch einen Schwenkpunkt 35 verlaufen. Der Schwenkpunkt 35 liegt längs einer vertikal auszurichtenden Hauptachse 36 des Schienenlagers 1 im Bereich der Konstruktionsanschlussfläche 21. Die genaue Lage des Schwenkpunkts 35 gegenüber der Konstruktionsanschlussfläche 21 hängt von der aktuellen Länge der längenveränderlich ausgebildeten Tragsäule 27 ab. Vorzugsweise ist der Schwenkpunkt 35 aber bei keiner Länge der Tragsäule 27 weiter von der Konstruktionsanschlussfläche 21 entfernt als 20 % einer Höhe des Schienenlagers 1 zwischen einer Strukturanschlussfläche 51 des Sockelelements 5 und der Konstruktionsanschlussfläche 21 des Lagerelements 4. Insbesondere erlaubt das Kugellager 28 der nicht blockierten Gelenkanordnung 26 das Verschwenken des Lagerelements 4 mit der Konstruktionsanschlussfläche 21 um jede rechtwinklig zu der Hauptachse 36 durch den Schwenkpunkt 35 verlaufende Schwenkachse. Darüber hinaus erlaubt das Kugelgelenk 28 der nicht blockierten Gelenkanordnung 26 ein Verdrehen des Lagerelements 4 gegenüber dem Sockelelement 5 um die Hauptachse 36. Dies ist jedoch weniger relevant, weil die Tragsäule 27 durch Einschrauben längenveränderlich ist.

Konkret ist die Innensäule 31 der Tragsäule 27 an ihrem Außenumfang mit einem Außengewinde 37 versehen, das über eine Vielzahl von Gewindegängen in ein Innengewinde 38 einer ebenfalls topfförmig ausgebildeten Außensäule 39 eingreift. Durch relatives Verdrehen der Innensäule 31 und der Außensäule 39 um die Hauptachse 36, d. h. durch unterschiedlich weites Einschrauben der Innensäule 31 in die Außensäule 39 ist die Länge der Tragsäule 27 zwischen der Gelenkanordnung 26 und dem Lagerelement 4 einstellbar. Ebenso wie der Gelenkkopf 30 durch einen quer zu der Hauptachse 36 verlaufenden Bodenbereich der Innensäule 31 ausgebildet ist, ist das Lagerelement 4 durch einen quer zu der Hauptachse 36 verlaufenden Bodenbereich der Außensäule 39 ausgebildet.

Die Tragsäule 27 weist nur eine kleine Streckung längs der Hauptachse 36 auf. Ihr kleinster Außendurchmesser, d. h. der Außendurchmesser der Innensäule 31, ist mindestens halb so groß wie und vorzugsweise so wie hier etwa genauso groß wie oder sogar größer als die maximale Länge der Tragsäule 27 längs der Hauptachse 36. Hieraus resultiert nicht nur eine hohe Knickstabilität der Tragsäule 27, sondern bei geeigneter Wahl des Profils der Gewinde 37 und 38 resultieren auch ausreichend große Abstützfläche zwischen der Innensäule 31 und der Außensäule 39, um in Richtung der Hauptachse 36 auf das Schienenlager 1 einwirkende Kräfte sicher abzutragen.

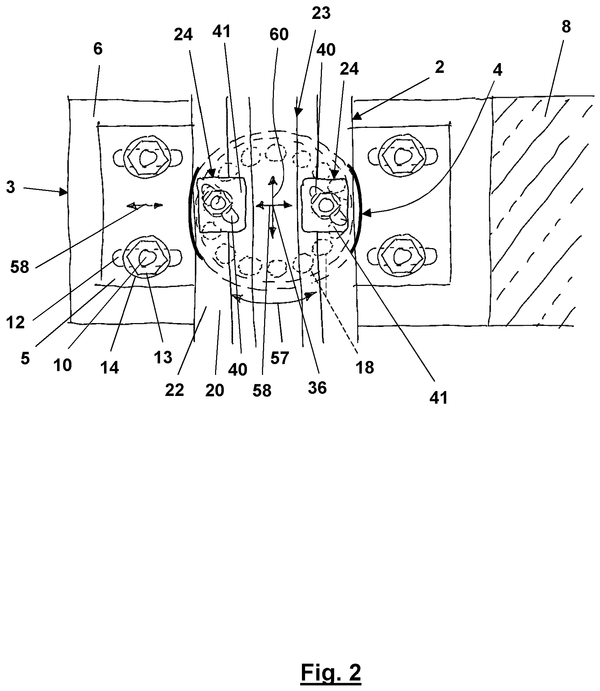

Die Einschraubstellung der Tragsäule 27 und damit ihre Länge wird bei blockierter Gelenkanordnung 26 durch die an dem Lagerelement 4 befestigte Schiene 2 fixiert. Um dies in nahezu beliebiger Drehstellung der Außensäule 39 gegenüber der Innensäule 31 tun zu können, ist in dem Lagerelement 4, das in **Fig. 2** im Wesentlichen verdeckt ist, eine größere Zahl von Befestigungslöchern 18 mit Innengewinden vorgesehen, die ringförmig um die Hauptachse 36 und achsensymmetrisch zu der Hauptachse 36 angeordnet sind. Insgesamt sind hier 16 Befestigungslöcher 18 mit Innengewinden in dem Lagerelement 4 in gleichen Abständen 16 um die Hauptachse 36 herum angeordnet.

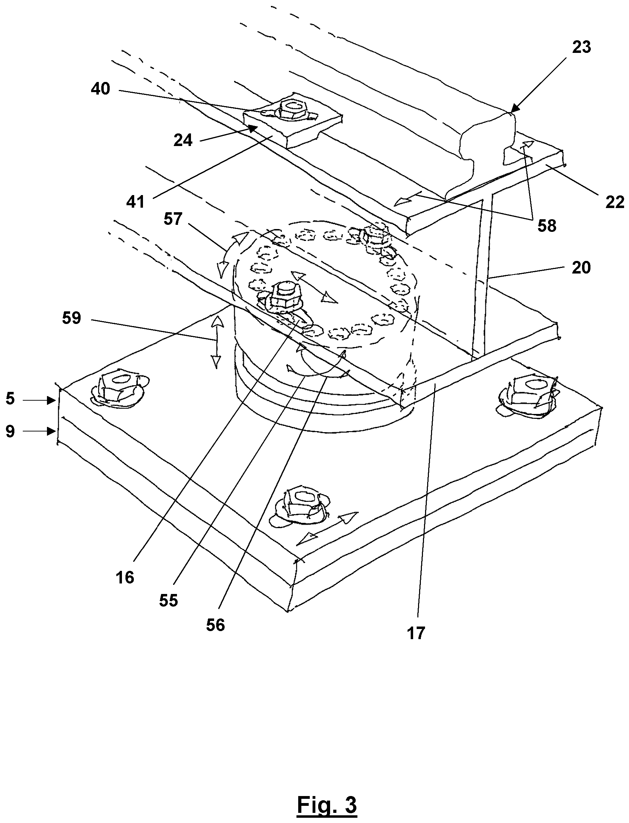

Noch deutlicher als Fig. 2 zeigt die perspektivische Ansicht gemäß **Fig. 3****,** dass die Schraubklemmen 24 mit Hilfe von Langlöchern 40 in ihren Klemmelementen 41 eine Justierung der Fahrschiene 23 in horizontaler Querrichtung gegenüber der Zwischenschiene 20 erlauben. Auch die Gestaltung der Langlöcher 16 in dem Fuß 17 der Zwischenschiene 20 geht aus Fig. 3 deutlicher hervor, als aus Fig. 1 und 2.

Bei der Montage des Schienenlagers 1 kann zunächst mit Hilfe der Gelenkanordnung 26 eine Oberseite 42 der Innensäule 31 horizontal ausgerichtet werden. Dann wird die Gelenkanordnung 26 durch Anziehen des Spannbolzens 33 blockiert, bevor auf die Innensäule 31 die Außensäule 39 aufgeschraubt wird. Das Aufschrauben erfolgt soweit, dass die parallel zu der Oberseite 42 verlaufende Konstruktionsanschlussfläche 21 eine gewünschte Höhe über der Tragstruktur 3 aufweist. Dann wird die Schiene 2 an dem Lagerelement 4 befestigt, um diese Höhenlage zu fixieren. Die seitliche Ausrichtung des Schienenlagers 1 quer zu der Tragstruktur 3 kann auch noch später herbeigeführt werden und wird dann durch Anziehen der Muttern 13 auf den Befestigungsbolzen 20 fixiert.

Mit Doppelpfeilen 55 bis 60 sind in den bisher beschriebenen Figuren und den folgenden Figuren die bei dem Schienenlager 1 vorhandenen Einstellmöglichkeiten eingezeichnet. Sie betreffen alle drei rotatorischen Freiheitsgrade, siehe die Doppelpfeile 55 bis 57, und translatorische Freiheitsgrade, siehe die Doppelpfeile 58 bis 60.

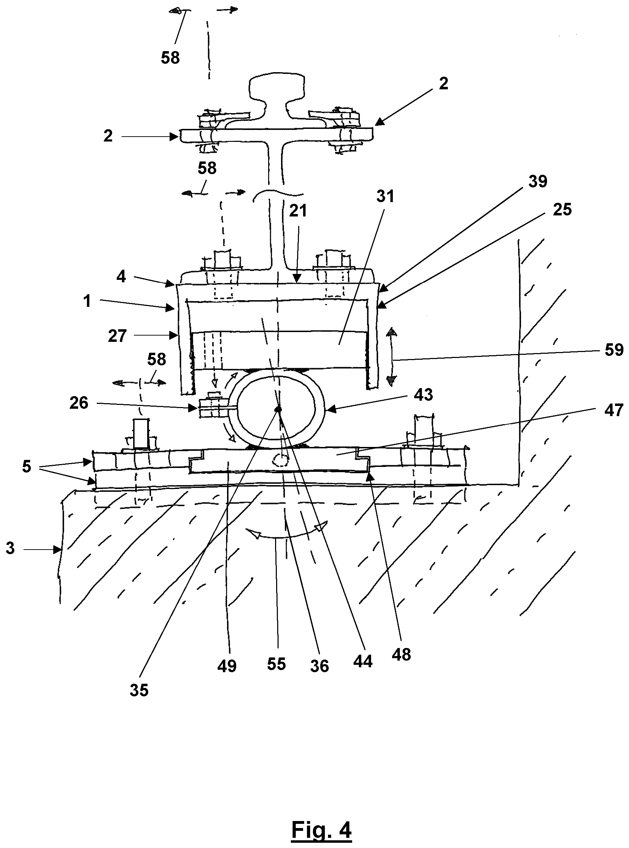

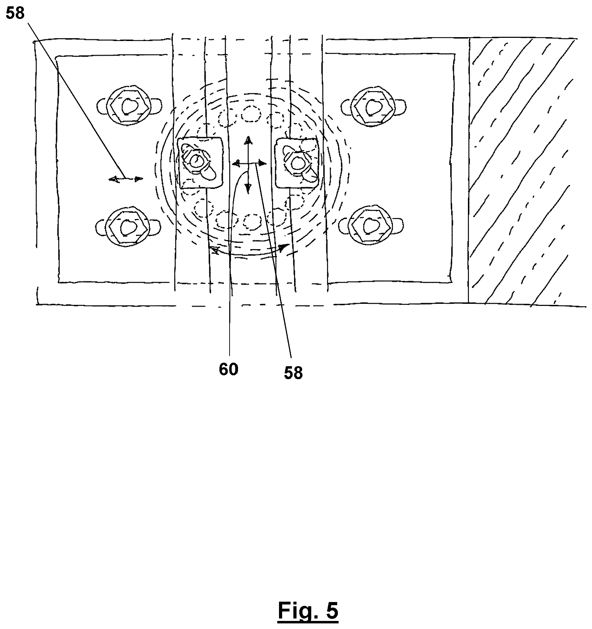

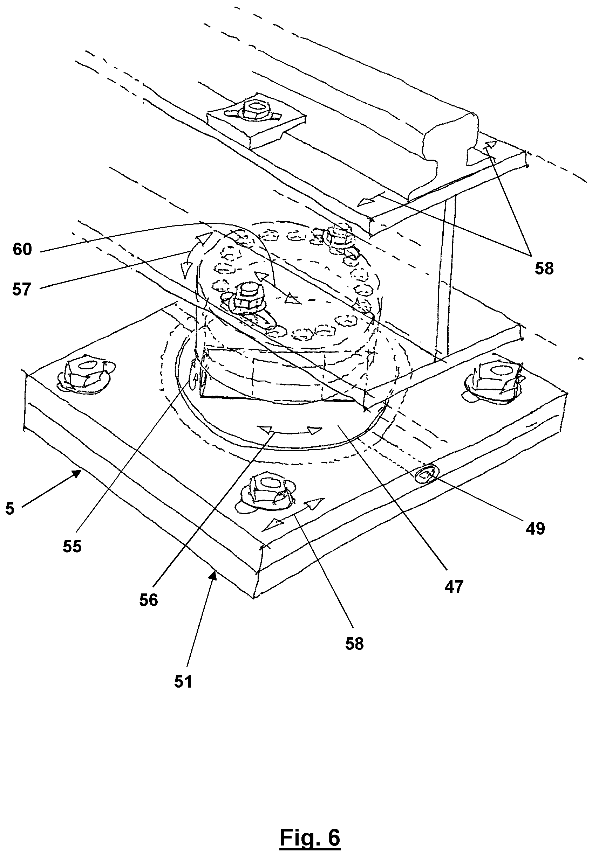

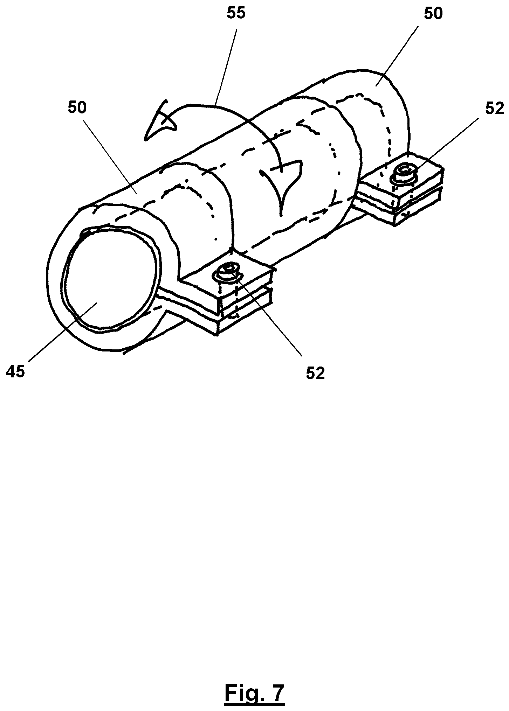

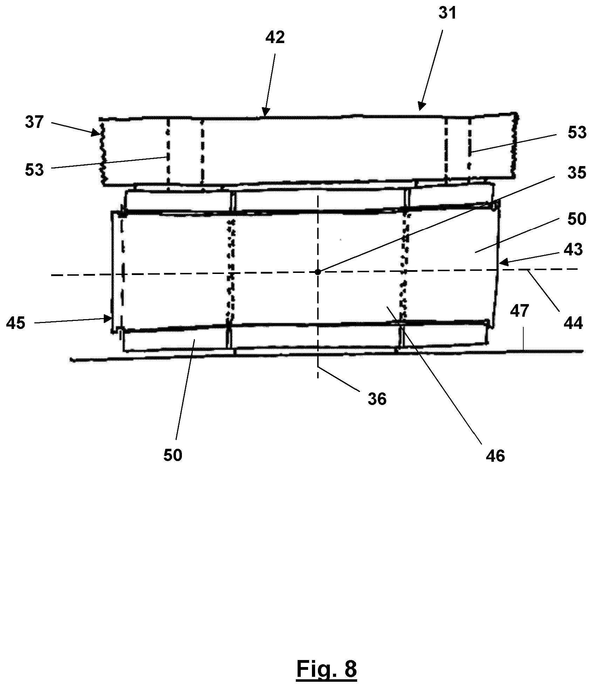

Das in **Fig. 4 bis 8** als weitere Ausführungsform einer erfindungsgemäßen Lagervorrichtung dargestellte Schienenlager 1 unterscheidet sich von demjenigen gemäß Fig. 1 bis 3 in der Ausgestaltung der Gelenkanordnung 26 und der daran in Richtung der Tragstruktur 3 und der Schiene 2 unmittelbar anschließenden Bestandteile der Ausgleichseinrichtung 25. Konkret weist die Gelenkanordnung 26 hier ein Schwenkgelenk 43 mit einer einzigen Schwenkachse 44 auf, die rechtwinklig zu der Hauptachse 36 durch den Schwenkpunkt 35 verläuft. Dabei liegt der Schwenkpunkt 35 in einem größeren Abstand zu der Konstruktionsanschlussfläche 21 als bei der Ausführungsform des Schienenlagers 1 gemäß Fig. 1 bis 3. Das einachsige Schwenkgelenk 43 weist konkret einen längs der Schwenkachse 44 ausgerichteten Lagerbolzen 45 auf, der in der Mitte seiner Längserstreckung mit einer Hülse 46 drehfest verbunden ist, die wiederum starr mit einem Drehteller 47 eines Drehgelenks 48 starr verbunden ist. Der Drehteller 47 ist um die Hauptachse 36 drehbar in dem hier zweiteilig ausgeführten Sockelelement 5 gelagert, wobei die Verdrehbarkeit des Drehtellers 47 mit Hilfe einer Klemmschraube 49 blockierbar ist. Durch Verdrehen des Drehtellers 47 mit der Hülse 46 und dem Lagerbolzen 45 um die Hauptachse 36 kann die Schwenkachse 44 in jede beliebige Richtung ausgerichtet werden, die quer zu der Hauptachse 36 durch den Schwenkpunkt 35 verläuft. Dadurch kann jede beliebige Neigung der Strukturanschlussfläche 51, die sich durch Ungenauigkeiten der angrenzenden Tragstruktur 3 ergibt, ausgeglichen werden.

Das Schwenkgelenk 43 weist weiterhin zwei äußere Lagerschalen 50 auf, die auf beiden Seiten der Hülse 46 auf dem Lagerbolzen 45 angeordnet sind. Die Lagerschalen 50 sind starr mit der hier plattenförmigen Innensäule 31 der Tragsäule 27 verbunden. Beide Lagerschalen 50 sind geschlitzt, wobei ihre freien Enden mit Spannschrauben 52 gegeneinander verspannbar sind, um die Lagerschalen 50 an dem Lagerbolzen 45 festzulegen. Die Spannschrauben 52 sind durch Löcher 53 in der Innensäule 31 hindurch zugänglich, solange die Außensäule 39 noch nicht auf die Innensäule 31 aufgeschraubt ist. Die Ausdehnung des Schwenkgelenks 43 in Richtung der Schwenkachse 44 ist gerade nur so groß, dass die Außensäule 39, ohne mit dem Schwenkgelenk zu kollidieren, über die Innensäule 31 hinweg auf deren Außengewinde 37 aufgeschraubt werden kann.

Bis auf die voranstehend beschriebenen Details unterscheidet sich die Ausführungsform des Schienenlagers 1 gemäß Fig. 4 bis 8 nicht von dessen Ausführungsform gemäß Fig. 1 bis 3. Insbesondere ist die übliche Vorgehensweise bei der Montage des Schienenlagers insoweit dieselbe, als das zunächst die Gelenkanordnung 26 der Ausgleichseinrichtung 25 so justiert wird, dass die Oberseite 42 der Innensäule 31 exakt horizontal ausgerichtet ist. Dann wird die Gelenkanordnung 36 - hier mit Hilfe der Klemmschraube 49 und der Spannschrauben 52 - blockiert, bevor die Außensäule 39 auf die Innensäule 31 so aufgeschraubt wird, dass eine gewünschte Höhenlage der Konstruktionsanschlussfläche 21 über der Strukturanschlussfläche 51 eingestellt wird. Anschließend wird durch Befestigen der Schiene 2 an dem als Lagerelement 4 dienenden Bodenbereich der topfförmigen Außensäule 39 die eingestellte Länge der Tragsäule 27 und damit die Höhe der Konstruktionsanschlussfläche fixiert.

### BEZUGSZEICHENLISTE

- 1: Schienenlager
- 2: Schiene
- 3: Tragstruktur
- 4: Lagerelement
- 5: Sockelelement
- 6: Konsole
- 7: Befestigungsplatte
- 8: Betonkörper
- 9: Höhenausgleichsplatte
- 10: Befestigungsbolzen
- 11: Loch
- 12: Langloch
- 13: Mutter
- 14: Unterlegscheibe
- 15: Befestigungsschraube
- 16: Langloch
- 17: Fuß
- 18: Befestigungsloch
- 19: Innengewinde
- 20: Zwischenschiene
- 21: Konstruktionsanschlussfläche
- 22: Kopf
- 23: Fahrschiene
- 24: Schraubklemme
- 25: Ausgleichseinrichtung
- 26: Gelenkanordnung
- 27: Tragsäule
- 28: Kugelgelenk
- 29: Gelenkschale
- 30: Gelenkkopf
- 31: Innensäule
- 32: Ausnehmung
- 33: Spannbolzen
- 34: Spannplatte
- 35: Schwenkpunkt
- 36: Hauptachse
- 37: Außengewinde
- 38: Innengewinde
- 39: Außensäule
- 40: Langloch
- 41: Klemmelement
- 42: Oberseite
- 43: Schwenkgelenk
- 44: Schwenkachse
- 45: Lagerbolzen
- 46: Hülse
- 47: Drehteller
- 48: Drehgelenk
- 49: Klemmschraube
- 50: Lagerschale
- 51: Strukturanschlussfläche
- 52: Spannschraube
- 53: Loch
- 54: Schwenkachse
- 55: Doppelpfeil
- 56: Doppelpfeil
- 57: Doppelpfeil
- 58: Doppelpfeil
- 59: Doppelpfeil
- 60: Doppelpfeil

## Patentansprüche

1. Lagervorrichtung
- mit einem Lagerelement (4) zur Lagerung eines Konstruktionselements einer Stahlkonstruktion,
- mit einem Sockelelement (5) zur Befestigung an einer Tragstruktur (3) und
- mit einer das Lagerelement (4) gegenüber dem Sockelelement (5) ausrichtenden und an dem Sockelelement (5) in Richtung einer vertikal auszurichtenden virtuellen Hauptachse (36) der Lagervorrichtung abstützenden verstellbaren Ausgleichseinrichtung (25),
- wobei mit Hilfe der Ausgleichseinrichtung (25) eine Höhenlage und eine Winkellage des Lagerelements (4) gegenüber dem Sockelelement (5) einstellbar sind,
**dadurch gekennzeichnet,**
- **dass** die Ausgleichseinrichtung (25) eine längs der Hauptachse (36) ausgerichtete mechanische Reihenschaltung
- einer durch gegeneinander Verspannen ihrer Bestandeile blockierbaren Gelenkanordnung (26) und
- einer durch Einschrauben längs der Hauptachse (36) längenveränderlichen Tragsäule (27)
aufweist,
- wobei die nicht blockierte Gelenkanordnung (26) ein Verschwenken des Lagerelements (4) gegenüber dem Sockelelement (5) um jede Schwenkachse (44) ermöglicht, die die Hauptachse in einem Schwenkpunkt (35) rechtwinklig schneidet, und
- wobei eine Einschraubstellung der Tragsäule (27) durch das an dem Lagerelement (4) gelagerte Konstruktionselement fixierbar ist.

2. Lagervorrichtung nach Anspruch 1, **wobei** der Schwenkpunkt (35) in Richtung längs der Hauptachse (36) einen Abstand zu einer Konstruktionsanschlussfläche (21) des Lagerelements (4) aufweist, der nicht mehr als 20 % einer Gesamthöhe der Lagervorrichtung zwischen einer Strukturanschlussfläche (51) des Sockelelements (5) und der Konstruktionsanschlussfläche (21) des Lagerelements (4) beträgt.

3. Lagervorrichtung nach Anspruch 1 oder 2, **wobei** die Gelenkanordnung ein Kugelgelenk mit einer kugelschalenausschnittförmigen Gelenkschale (29) und einem darin anliegenden Gelenkkopf (30) aufweist, wobei ein quer zu der Hauptachse (36) verlaufender Kopfdurchmesser des Gelenkkopfs (30) optional nicht kleiner ist als ein kleinster Säulendurchmesser der Tragsäule (27).

4. Lagervorrichtung nach Anspruch 3, **wobei** die Gelenkschale und/oder der Gelenkkopf (30) eine Ausnehmung (32) zum Durchtritt eines längs der Hauptachse (36) verlaufenden Spannbolzens (33) aufweisen, wobei der Spannbolzen (33) radiales Spiel in mindestens einer der Ausnehmungen (32) aufweist.

5. Lagervorrichtung nach Anspruch 1 oder 2, **wobei** die Gelenkanordnung (26) ein einachsiges Schwenkgelenk (43) mit einer die Hauptachse (36) in dem Schwenkpunkt (35) rechtwinklig schneidenden Schwenkachse (44) und ein mit dem Schwenkgelenk (43) längs der Hauptachse (36) mechanisch in Reihe geschaltetes Drehgelenk (48) mit einer längs der Hauptachse (36) verlaufenden Drehachse aufweist, wobei das Schwenkgelenk (43) mechanisch zwischen das Drehgelenk (48) und das Lagerelement (4) geschaltet ist.

6. Lagervorrichtung nach einem der vorhergehenden Ansprüche, **wobei** ein kleinster oder der kleinste Säulendurchmesser der Tragsäule (27) quer zu der Hauptachse (36) mindestens 50 %, vorzugsweise mindestens 75 % und mehr bevorzugt mindestens 100 % einer maximalen Säulenhöhe der Tragsäule (27) längs der Hauptachse (36) beträgt.

7. Lagervorrichtung nach einem der vorhergehenden Ansprüche, **wobei** die Tragsäule (27) eine topfförmige Außensäule (39) mit einem Innengewinde (38) und eine Innensäule (31) mit einem in das Innengewinde (38) einschraubbaren Außengewinde (37) aufweist, wobei das Außengewinde (37) bei jeder Länge der Tragsäule (27) über mindestens 3, vorzugsweise mindestens 5 und am meisten bevorzugt mindestens 10 Gewindegänge in das Innengewinde (38) eingreift.

8. Lagervorrichtung nach Anspruch 7, **wobei** die Außensäule (39) oder die Innensäule (31) und vorzugsweise die Innensäule (31) einstückig mit einem Bestandteil der Gelenkanordnung (26) ausgebildet ist.

9. Lagervorrichtung nach Anspruch 7 oder 8, **wobei** ein quer zu der Hauptachse (36) verlaufender Bodenbereich der Innensäule (31) oder der Außensäule (39) und vorzugsweise der Außensäule (39) mit mindestens acht, vorzugsweise mit mindestens zwölf und noch mehr bevorzugt mit mindestens sechzehn ringförmig um die Hauptachse (36) herum verteilt angeordneten Befestigungslöchern (18) versehen ist, wobei die Befestigungslöcher (18) vorzugsweise achsensymmetrisch zu der Hauptachse (36) angeordnet und/oder mit Innengewinden (19) für den Eingriff von Befestigungsschrauben (15) versehen sind.

10. Lagervorrichtung nach einem der vorhergehenden Ansprüche, **wobei** das Sockelelement (5) Langlöcher (12) für den Durchtritt von an der Tragstruktur (3) abgestützten Befestigungsbolzen (10) aufweist, wobei die Langlöcher (12) quer zu einer horizontalen Haupterstreckungsrichtung des Konstruktionselements ausgerichtet sind.

11. Lagervorrichtung nach Anspruch 10, **wobei** mindestens eine Höhenausgleichsplatte (9) zur Anordnung zwischen dem Sockelelement (5) und der Tragstruktur (3) vorgesehen ist, wobei die Höhenausgleichsplatte (9) Löcher (11) für den Durchtritt der an der Tragstruktur (3) abgestützten Befestigungsbolzen (10) aufweist.

12. Lagervorrichtung nach einem der vorhergehenden Ansprüche, **wobei** das Lagerelement (4) ausschließlich über die mechanische Reihenschaltung der Gelenkanordnung (26) und der Tragsäule (27) an dem Sockelelement (5) abgestützt ist.

13. Lagervorrichtung nach einem der vorhergehenden Ansprüche, **wobei** das Lagerelement (4) zur Lagerung einer Zwischenschiene (20) ausgebildet ist, die ihrerseits zur Lagerung einer Fahrschiene (23) ausgebildet ist.

14. Kranbahn mit zwei Schienen (2) und mit einer Mehrzahl von Lagervorrichtungen nach einem der vorhergehenden Ansprüche, wobei die Lagervorrichtungen längs der beiden Schienen verteilt angeordnet sind und die beiden Schienen (2) gegenüber einer Tragstruktur (3) definiert ausrichten.

15. Stahlbau mit einer Stahlkonstruktion und mit einer Mehrzahl von Lagervorrichtungen nach einem der Ansprüche 1 bis 13, wobei die Lagervorrichtungen über eine Strukturschnittstelle der Stahlkonstruktion verteilt angeordnet sind und die Stahlkonstruktion gegenüber einer Tragstruktur (3) definiert ausrichten.
